# EUROPÄISCHE PATENTSCHRIFT

(11) **EP 2 592 261 B1**
(45) Veröffentlichungstag und Bekanntmachung des Hinweises auf die Patenterteilung: **25.02.2015**
(21) Anmeldenummer: 12006441.5
(22) Anmeldetag: 14.09.2012
(51) Int. Cl.: F02N 11/08

(54) **Verfahren zum Betrieb eines Start-Stopp-Systems eines Kraftfahrzeugs und Kraftfahrzeug**
Method for operating a start stop system of a motor vehicle and motor vehicle
Procédé destiné au fonctionnement d'un système de démarrage-arrêt d'un véhicule automobile et véhicule automobile

(30) Priorität: 11.11.2011 DE 102011118252
(43) Veröffentlichungstag der Anmeldung: 15.05.2013
(73) Patentinhaber: AUDI AG, 85045 Ingolstadt (DE)
(72) Erfinder: Engel, Sebastian, 85051 Ingolstadt (DE)
(74) Vertreter: Thielmann, Frank

(56) Entgegenhaltungen:
- WO-A1-03/001055
- DE-A1- 19 942 371
- DE-A1-102006 009 654
- DE-A1-102009 042 309
- JP-A- 2010 138 786

## Beschreibung

Die Erfindung betrifft ein Verfahren zum Betrieb eines Start-Stopp-Systems eines Kraftfahrzeugs, welches zum Ausschalten des Motors des Kraftfahrzeugs in einer Standphase des Kraftfahrzeugs ausgebildet ist, sowie ein Kraftfahrzeug mit einem Start-Stopp-System.

Start-Stopp-Systeme sind für Kraftfahrzeuge heute bereits weithin bekannt und werden auch in Serienfahrzeugen bereits eingesetzt. Diese Systeme zeichnen sich dadurch aus, dass der Motor des Kraftfahrzeugs in Stillstandsphasen abgeschaltet wird, beispielsweise dann, wenn das Kraftfahrzeug an einer Ampel wartet oder im Stau stillsteht und der Fahrer keinen Gang eingelegt hat. Dabei wird in im Stand der Technik bekannten Start-Stopp-Systemen der Motor in Reaktion auf eine Bedienhandlung des Fahrers neu gestartet. Bekannt ist es beispielsweise, als Bedienhandlung für einen Neustart des Motors eine Betätigung des Kupplungspedals und das Einlegen eines Ganges (einer Fahrstufe) zu fordern.

Gerade in Staus und ähnlichen Verkehrssituationen ist ein derartiges Vorgehen jedoch nachteilhaft, da der Fahrer das Ende des Staus, dessen Auflösung bzw. Bewegungsphasen innerhalb des Staus nicht direkt einsehen kann, so dass der Motor häufig erst zu dem Zeitpunkt neu gestartet wird, zu dem der direkt vor dem eigenen Kraftfahrzeug befindliche Verkehrsteilnehmer wieder anfährt. Dies hat zur Folge, dass der gesamte Prozess des "Wiederanfahrens" unnötig verlängert wird. Mithin werden Staus langsamer aufgelöst oder durch langsameres Vorankommen innerhalb des Staus verlängert und dergleichen.

Aus der Druckschrift WO 03/001055 A1 ist ein automatisches Motor-Abschalt-/Anlassersystem für Kraftfahrzeuge bekannt. Dieses umfasst eine Vorrichtung zur Messung des Abstandes und/oder der Differenzgeschwindigkeit zu vorausfahrenden Fahrzeugen. Ein Anlassen erfolgt vorzugsweise, wenn der Abstand beziehungsweise die Differenzgeschwindigkeit zum vorausbefindlichen Fahrzeug zunimmt. Vorzugsweise werden neben dem jeweils nächstliegenden Fahrzeug in Fahrtrichtung auch eine vorbestimmte Anzahl weiterer vorausbefindlicher Fahrzeuge berücksichtigt. Ein Anlassen des Motors kann erfolgen, wenn von den innerhalb einer Abstandsgrenze erfassten in Fahrtrichtung vorausbefindlichen Fahrzeugen, bis auf eine vorgegebene Anzahl der unmittelbar nächstliegenden Fahrzeuge alle weiter vorausbefindlichen Fahrzeuge einen sich über eine Schwelle erhöhenden Abstand und/oder eine Differenzgeschwindigkeit oberhalb einer Mindestdifferenzgeschwindigkeit aufweisen. Die Erfassung der Abstände und Differenzgeschwindigkeiten kann auch von einem unmittelbar vorausbefindlichen Fahrzeug und relativ zum unmittelbar vorausfahrenden Fahrzeug erfolgen. Die Steuereinrichtung des eigenen Fahrzeugs kann diese von dem unmittelbar vorausfahrenden Fahrzeug ermittelten und an das eigene Fahrzeug übertragenen Daten berücksichtigen.

Der Erfindung liegt daher die Aufgabe zugrunde, den Betrieb eines Start-Stopp-Systems dahingehend zu verbessern, dass der zeitliche Ablauf eines Neustarts in einer Stausituation optimiert wird.

Zur Lösung dieser Aufgabe ist bei einem Verfahren der eingangs genannten Art erfindungsgemäß vorgesehen, dass in einer detektierten Stausituation über wenigstens eine drahtlose Kommunikationseinrichtung von vor dem eigenen Kraftfahrzeug befindlichen weiteren Verkehrsteilnehmern empfangene Bewegungszustandsinformationen der weiteren Verkehrsteilnehmer zur Ermittlung einer eine Auflösung und/oder Bewegungsphase des Staus beschreibenden Stauinformation ausgewertet werden und ein automatisches Starten des Motors und/oder eine Ausgabe eines Hinweises an den Fahrer in Abhängigkeit der Stauinformation erfolgt, wobei die Position und Geschwindigkeit eines vor dem Kraftfahrzeug (1) befindlichen Anfahrpunktes (17), an dem die weiteren Verkehrsteilnehmer (12) vom stillstehenden in den fahrenden Zustand übergehen, als Stauinformation ermittelt wird, wobei das Starten des Motors (2) und/oder die Ausgabe des Hinweises bei Unterschreitung eines Schwellwerts, der in Abhängigkeit von der Geschwindigkeit des Anfahrpunktes (17) angepasst wird, durch den Abstand des Anfahrpunktes (17) von dem eigenen Kraftfahrzeug (1) erfolgt.

Die vorliegende Erfindung schlägt mithin vor, eine Fahrzeug-zu-Fahrzeug-Kommunikation (car2car-Kommunikation) zu nutzen, um die Verkehrssituation zu analysieren und den Betrieb des Start-Stopp-Systems dahingehend zu optimieren. Hierfür kann das erfindungsgemäße Verfahren beispielsweise in einem Steuergerät des Start-Stopp-Systems ausgeführt werden. Über eine der Fahrzeug-zu-Fahrzeug-Kommunikation zugeordnete Kommunikationseinrichtung werden mithin Bewegungszustandsinformationen (Bewegungsprofile) umliegender Fahrzeuge bzw. Verkehrsteilnehmer drahtlos empfangen und bezüglich der aktuellen Situation ausgewertet. Dabei ist es besonders vorteilhaft, wenn alle umliegenden Verkehrsteilnehmer zur Fahrzeug-zu-Fahrzeug-Kommunikation ausgebildet sind, so dass die Bewegungszustandsinformationen aller Verkehrsteilnehmer, die vor dem Kraftfahrzeug auf der Spur des Kraftfahrzeugs innerhalb der Kommunikationsreichweite vorhanden sind, empfangen und ausgewertet werden. Sind nicht alle Kraftfahrzeuge zur Fahrzeug-zu-Fahrzeug-Kommunikation ausgebildet, so werden mit besonderem Vorteil zur Ermittlung der Stauinformation die Bewegungszustandsinformationen aller zur Fahrzeug-zu-Fahrzeug-Kommunikation ausgebildeten Verkehrsteilnehmer, die sich vor dem Kraftfahrzeug auf der Spur des Kraftfahrzeugs innerhalb der Kommunikationsreichweite befinden, ausgewertet. Dabei sei an dieser Stelle zum einen darauf hingewiesen, dass selbstverständlich auch das eigene Kraftfahrzeug durch andere Verkehrsteilnehmer nutzbare Bewegungszustandsinformationen aussenden kann, wobei die Bewegungszustandsinformationen selbstverständlich auch zu anderen Zwecken ausgewertet werden können. Zum anderen kann selbstverständlich vorgesehen sein, dass auch zur Detektion der Stausituation an sich die Bewegungszustandsinformationen der weiteren Verkehrsteilnehmer, insbesondere der Verkehrsteilnehmer, die vor dem Kraftfahrzeug auf der Spur des Kraftfahrzeugs befindlich sind, ausgewertet werden.

Im Rahmen des erfindungsgemäßen Verfahrens wird also in Szenarien zusätzlich eingegriffen, in denen das Start-Stopp-System den Motor aufgrund eines Anhaltens in einem Stau abgestellt hat. Anhand der Fahrzeug-zu-Fahrzeug-Kommunikation erkennt das Steuergerät die Bewegungsprofile der Kraftfahrzeuge in seinem Umfeld. Wird nun bei der Auswertung der Bewegungszustandsinformationen, wozu beispielsweise geeignete Algorithmen und/oder Hardwarekomponenten in dem Steuergerät des Start-Stopp-Systems vorgesehen sein können, erkannt, dass viele andere Verkehrsteilnehmer in einer bestimmten örtlichen oder zeitlichen Vorausschau insbesondere korreliert vom stillstehenden in den fahrenden Zustand übergehen, so ist eine Auflösung bzw. Bewegungsphase des Staus detektierbar, so dass entsprechende Maßnahmen ergriffen werden können, die zu einem früheren Starten des Motors führen.

Dabei ist es zunächst bevorzugt denkbar, dass der Motor präventiv, beispielsweise bei Erfüllung einer bestimmten, die Stauinformation auswertenden Bedingung, präventiv wieder gestartet wird, um schnellstmöglich ein Anfahren zu ermöglichen, so dass die Zeit zur Stauauflösung bzw. zum Übergang in die Bewegungsphase minimiert wird. Zusätzlich oder alternativ kann jedoch auch vorgesehen sein, dass eine Ausgabe eines Hinweises an den Fahrer bezüglich der Auflösung und/oder Bewegungsphase des Staus ausgegeben wird, so dass dieser, falls kein automatisches Wiederanlassen des Motors vorgesehen ist, entsprechende Maßnahmen ergreifen kann, um zeitnah selbst wieder anzufahren und somit den Zeitablauf zu optimieren. Der Motor wird somit aufgrund einer Bedienhandlung des Fahrers nicht erst dann gestartet, wenn der Vordermann anfährt, sondern das Anlassen des Motors aufgrund der Bedienhandlung kann bereits früher geschehen, so dass auch hier die Zeit zum Wiederanfahren und zur Auflösung des Staues verringert wird.

Durch das präventive Neustarten des Motors des Kraftfahrzeugs, welches insbesondere automatisch vorgenommen wird, kann das Anfahren zügig und ohne größere Verzögerung durchgeführt werden. Dadurch verringert sich insgesamt die Zeit, die zur Auflösung des Staus bzw. zum Übergang in die Bewegungsphase benötigt wird. Durch das Starten des Motors bzw. die Information wird zudem die Aufmerksamkeit des Fahrers auf das Verkehrsgeschehen gelenkt, so dass er sich psychisch und physisch auf die Weiterfahrt einstellen kann.

In der vorliegenden Erfindung ist vorgesehen, dass die Position und Geschwindigkeit eines vor dem Kraftfahrzeug befindlichen Anfahrpunktes als Stauinformation ermittelt wird. Fahren Fahrzeuge, welche in einer Schlange stehen, nacheinander von vorne her an, kann ein virtueller Punkt detektiert werden, an dem Kraftfahrzeuge vom stillstehenden in den fahrenden Zustand übergehen, also ein Anfahrpunkt. Durch Analyse der Bewegungszustandsinformationen, welche insbesondere eine Geschwindigkeit und eine Position umfassen können, kann nun die Position und die zeitliche Entwicklung des Anfahrpunktes ermittelt werden. Üblicherweise wird sich der Anfahrpunkt mit einer im Wesentlichen konstanten Geschwindigkeit auf das Kraftfahrzeug zu bewegen.

Als Bedingung für das Starten des Motors und/oder die Ausgabe des Hinweises ist die Unterschreitung eines von der Geschwindigkeit des Anfahrpunktes abhängigen Schwellwerts durch den Abstand des Anfahrpunktes von dem eigenen Kraftfahrzeug vorgesehen, wobei die Geschwindigkeit des virtuellen Anfahrpunktes, die als in Zukunft konstant angenommen werden kann, mit berücksichtigt wird. Dann kann bei Annahme einer konstanten Geschwindigkeit des virtuellen Anfahrpunkts in der Richtung auf das eigene Kraftfahrzeug zu in einer gewissen zeitlichen Vorausschau der Motor gestartet werden (TTS - time to start). Hängt der Startzeitpunkt des Motors bzw. die Ausgabe des Hinweises bei der ersten Variante also rein von der Entfernung der Stauauflösung, allgemein des virtuellen Anfahrpunktes, ab, so fließt in der zweiten Variante auch die Geschwindigkeit der Stauauflösung, allgemein des Anfahrpunktes, mit ein.

Als Bewegungszustandsinformationen können eine Geschwindigkeit und/oder eine Position und/oder eine Beschleunigung empfangen werden. Die Position kann dabei beliebig aufgeschlüsselt sein, wobei es sich im Rahmen der vorliegenden Erfindung, insbesondere bei mehrspurigen Straßen, auf denen es staut, anbietet, dass die Positionsinformation auch eine Fahrspurinformation enthält. Ansonsten können Positionen beispielsweise anhand von GPS-Koordinaten, Kartendaten und/oder auch als relative Position zum eigenen Kraftfahrzeug wiedergegeben werden. Auch eine aktuelle Geschwindigkeit oder eine aktuelle Beschleunigung können im Rahmen der vorliegenden Erfindung verarbeitet werden, wobei die hier genannten möglichen Bewegungszustandsinformationen selbstverständlich auch für andere Fahrzeugsysteme nützlich über die Fahrzeug-zu-Fahrzeug-Kommunikation übertragen werden können.

Wie bereits erwähnt, ist die Kommunikationseinrichtung zweckmäßig eine Fahrzeug-zu-Fahrzeug-Kommunikationseinrichtung. Besonders vorteilhaft ist es, wenn die Reichweite der Kommunikation größer als 50 m, insbesondere größer als 100 m, ist. Je weiter sozusagen im Voraus Bewegungszustandsinformationen erhalten werden können, desto genauer ist es beispielsweise möglich, die Position und gegebenenfalls Geschwindigkeit des Anfahrpunktes zu ermitteln. Gegebenenfalls kann dann auch festgestellt werden, ob es sich um eine Bewegungsphase innerhalb eines Staus oder die Auflösung des Staus handelt. Dabei sei in diesem Zusammenhang darauf hingewiesen, dass es selbstverständlich auch möglich ist, die Bewegungszustandsinformationen über eine Art "Hopping" über die eigentliche Reichweite der Kommunikation hinaus zu übertragen, indem letztlich Kraftfahrzeuge empfangene Bewegungszustandsinformationen anderer Verkehrsteilnehmer weiter verbreiten. Als konkrete Kommunikationsnetzwerke bzw. Kommunikationsverbindungen können bereits im Rahmen der Fahrzeug-zu-Fahrzeug-Kommunikation vorgeschlagene Standards eingesetzt werden, beispielsweise der WLAN 802.11 p-Standard.

Bezüglich des Hinweises kann vorgesehen sein, dass dieser optisch und/oder akustisch und/oder haptisch ausgegeben wird, insbesondere über ein Head-Up-Display. Verschiedene Arten von Hinweisen sind denkbar, um die Aufmerksamkeit des Fahrers auf den bevorstehenden Anfahrzeitpunkt zu richten bzw. die Tatsache, dass der Motor automatisch angelassen wurde. Bevorzugt sind hierbei optische Anzeigen, die beispielsweise auch in Form einer graphischen Darstellung kodiert die Position und/oder Geschwindigkeit des Anfahrpunktes darstellen können, so dass der Fahrer trotz gegebenenfalls die Sicht versperrenden direkten Vorderfahrzeugen einen Hinweis darauf erhält, wann eine Bewegungsphase oder die Auflösung des Staus erfolgt. Möglich ist beispielsweise eine abstrahierte Darstellung der eigenen Fahrspur und der voranfahrenden Verkehrsteilnehmer, die überlagert von eine den Anfahrpunkt markierenden Linie bzw. einer Darstellung des Anfahrpunktes und dessen zeitlicher Entwicklung dargestellt wird.

Neben dem Verfahren betrifft die Erfindung auch ein Kraftfahrzeug, umfassend eine Kommunikationseinrichtung zur Kommunikation mit anderen Verkehrsteilnehmern und ein Start-Stopp-System mit einem zur Durchführung des erfindungsgemäßen Verfahren ausgebildeten Steuergerät. Sämtliche Ausführungen bezüglich des erfindungsgemäßen Verfahrens lassen sich analog auf das erfindungsgemäße Kraftfahrzeug übertragen, so dass auch hier die genannten Vorteile erreicht werden können.

Über die Kommunikationseinrichtung werden mithin Bewegungszustandsinformationen anderer Verkehrsteilnehmer empfangen, welche dann auch an das Steuergerät weitergeleitet werden, beispielsweise über ein Bussystem, insbesondere einen CAN-Bus. Dort kann beispielsweise vorgesehen sein, dass die Bewegungszustandsinformationen zunächst vorgefiltert werden, so dass nur die sich auf derselben Spur wie das Kraftfahrzeug vor dem Kraftfahrzeug befindlichen Verkehrsteilnehmer in der weiteren Analyse berücksichtigt werden. Das Steuergerät ist sodann zur Ermittlung der Stauinformation aus den Bewegungszustandsinformationen ausgebildet, beispielsweise zur Ermittlung der Position und gegebenenfalls Geschwindigkeit eines vor dem Kraftfahrzeug befindlichen Anfahrpunktes, wobei die Stauinformation dann bezüglich eines Kriteriums, beispielsweise des diskutierten Schwellwerts, weiter ausgewertet werden kann. Ist das Kriterium erfüllt, erfolgt eine Ansteuerung des Motors des Kraftfahrzeugs zum Starten und/oder der Anzeigevorrichtung zur Ausgabe des Hinweises.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: eine Prinzipskizze eines erfindungsgemäßen Kraftfahrzeugs,
- Fig. 2: eine Skizze zur Definition eines Anfahrpunktes, und
- Fig. 3: eine mögliche Darstellung zur Information und Ausgabe eines Hinweises an den Fahrer.

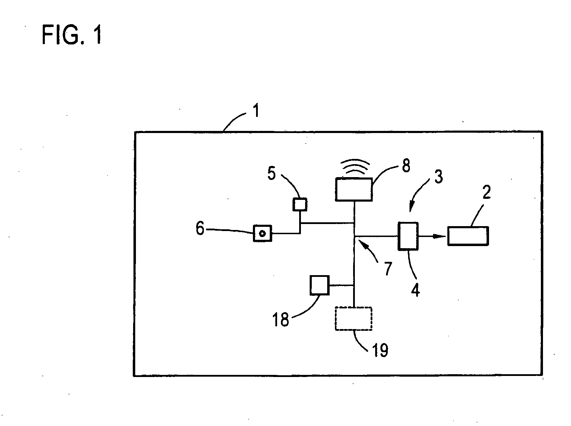

Fig. 1 zeigt eine Prinzipskizze eines erfindungsgemäßen Kraftfahrzeugs 1. Das Kraftfahrzeug 1 umfasst, wie grundsätzlich bekannt, einen Motor 2, hier einen üblichen Verbrennungsmotor. Ein Start-Stopp-System 3 mit einem Steuergerät 4 ist dazu ausgebildet, den Motor 2 bei Stillstand des Kraftfahrzeugs, beispielsweise in einem Stau, auszuschalten. Durch eine bestimmte Bedienhandlung, beispielsweise das Treten eines Kupplungspedals 5 und das Einlegen eines Ganges über einen Gangwahlhebel 6 kann dem Start-Stopp-System 3 mitgeteilt werden, dass der Motor 2 wieder angelassen werden soll.

Nachdem gerade in Stausituationen es für den Fahrer häufig erst mit dem Losfahren des unmittelbar vor ihm auf der eigenen Spur befindlichen Verkehrsteilnehmers ersichtlich ist, dass er selber losfahren muss, ergeben sich Zeitverzögerungen, wobei, um diese zu vermeiden, das Steuergerät 4 zur Durchführung des erfindungsgemäßen Verfahrens ausgebildet ist, wozu das Steuergerät 4 über ein Bussystem 7 insbesondere auch mit einer Kommunikationseinrichtung 8 für die Fahrzeug-zu-Fahrzeug-Kommunikation (car2car-Kommunikation) verbunden ist.

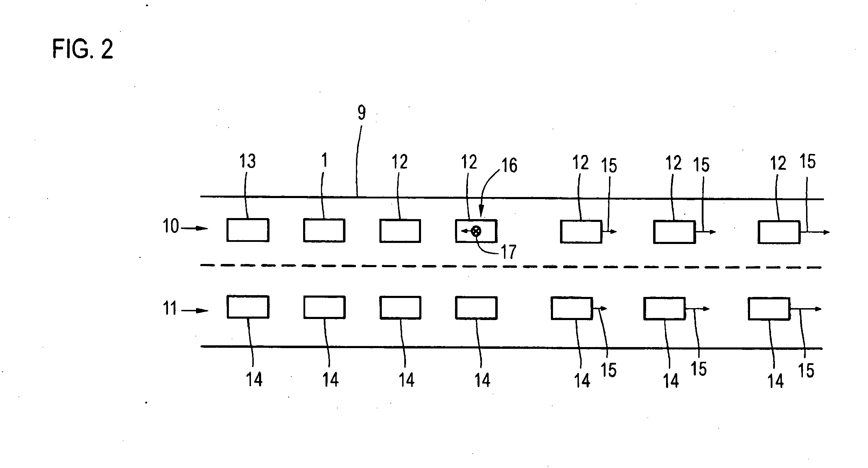

Die Kommunikationseinrichtung 8 kann dabei Informationen anderer Verkehrsteilnehmer bis hin zu einem Abstand von 100 m oder mehr empfangen, insbesondere auch Bewegungszustandsinformationen anderer Verkehrsteilnehmer, die im Steuergerät 4 ausgewertet werden können, vorliegend zum einen, um eine Stausituation grundsätzlich zu detektieren, in der sich das Kraftfahrzeug 1 befindet, zum anderen aber auch, um eine eine Auflösung und/oder Bewegungsphase des Staus beschreibende Stauinformation aus den Bewegungszustandsinformationen zu ermitteln. Hierzu werden die Bewegungszustandsinformationen zunächst dahingehend gefiltert, dass nur die Verkehrsteilnehmer berücksichtigt werden, die sich vor dem eigenen Kraftfahrzeug 1 auf der Spur des eigenen Kraftfahrzeugs 1 befinden, was mit Hilfe der Darstellung in Fig. 2 näher erläutert werden soll.

Dort ist eine Straße 9 gezeigt, die zwei in dieselbe Richtung führende Fahrspuren 10 und 11 aufweist. Das Kraftfahrzeug 1 befindet sich dabei auf der linken Fahrspur 10. Relevant für die Beurteilung des Vorhandenseins einer Bewegungsphase bzw. einer Auflösung des Staus sind nur die dem Kraftfahrzeug auf der Spur 10 voranfahrenden Verkehrsteilnehmer 12. Verkehrsteilnehmer 13 hinter dem Kraftfahrzeug 1 oder Verkehrsteilnehmer 14 auf der Nachbarspur 11 werden nicht berücksichtigt, das bedeutet, ihre Bewegungszustandsinformationen fließen nicht in die Berechnungen zur Ermittlung der Stauinformation ein.

Die Bewegungszustandsinformationen umfassen vorliegend neben der auch die Spur 10, 11 des Verkehrsteilnehmers 12, 13, 14 enthaltenden Position des jeweiligen Verkehrsteilnehmers 12, 13, 14 die aktuelle Geschwindigkeit, die in Fig. 2 durch die Pfeile 15 angedeutet ist. Auch die aktuelle Beschleunigung kann in den Bewegungszustandsinformationen enthalten sein. Das Kraftfahrzeug 1 sendet im Übrigen selbst über die Kommunikationseinrichtung 8 seine eigenen Bewegungszustandsinformationen aus.

Ersichtlich befindet sich in der in Fig. 2 dargestellten Situation der Stau gerade in einer Auflösung, das bedeutet, die rechts in Fig. 2 dargestellten Verkehrsteilnehmer 12, 14 bewegen sich bereits wieder mit einer gewissen Geschwindigkeit. Einer der Verkehrsteilnehmer 12, hier das Fahrzeug 16, auf der Fahrspur 10 des Kraftfahrzeugs 1 ist gerade im Begriff, anzufahren. Mithin kann nun ein virtueller Anfahrpunkt 17 definiert werden, der hier bei dem Fahrzeug 16 liegt. Durch Betrachtung insbesondere auch des zeitlichen Verlaufs der Bewegungszustandsinformationen kann das Steuergerät 4 nicht nur die aktuelle Position des Anfahrpunktes 17 ermitteln, sondern auch dessen Geschwindigkeit, welche im Wesentlichen konstant sein dürfte. Diese Position und Geschwindigkeit des Anfahrpunktes 17 werden nun im hier dargestellten Ausführungsbeispiel anhand einer Bedingung ausgewertet, um zu entscheiden, ob der Motor 2 automatisch gestartet werden soll und ein entsprechender optischer, akustischer und/oder haptischer Hinweis an den Fahrer ausgegeben werden soll, damit dieser sich physisch und psychisch auf den bevorstehenden Anfahrvorgang vorbereiten kann.

Vorliegend wird dabei unter der Annahme, dass die Geschwindigkeit des virtuellen Anfahrpunktes 17 in einer Vorausschau als konstant angenommen wird, wobei beispielsweise der aktuell bestimmte Wert für die Geschwindigkeit des Anfahrpunktes 17 oder ein gemittelter Wert für die Geschwindigkeit des Anfahrpunktes 17 herangezogen werden kann, ein von der Geschwindigkeit abhängiger Schwellwert für den Abstand des Anfahrpunktes 17 vom Kraftfahrzeug 1 ermittelt. Ergibt sich, dass der aktuell ermittelte Abstand des Anfahrpunktes 17 von dem Kraftfahrzeug 1 diesen Schwellwert unterschreitet, so wird der Motor 2 wieder angelassen und der oben beschriebene Hin weis wird über eine entsprechende Anzeigevorrichtung 18 ausgegeben, über die das Steuergerät 4 auch mittels des Bussystems 7 verbunden ist. Es sei an dieser Stelle angemerkt, dass an das Bussystem 7 selbstverständlich auch weitere Fahrzeugsysteme 19 angeschlossen sind.

Dabei sei an dieser Stelle noch darauf hingewiesen, dass im Rahmen der Erfindung auch eine ständige Anzeige und somit Information des Fahrers des Kraftfahrzeugs 1 erreicht werden kann, indem über die Anzeigevorrichtung 18 die Stauinformation, hier eine Information bezüglich des virtuellen Anfahrpunktes, dem Fahrer über eine Darstellung zur Kenntnis gebracht wird.

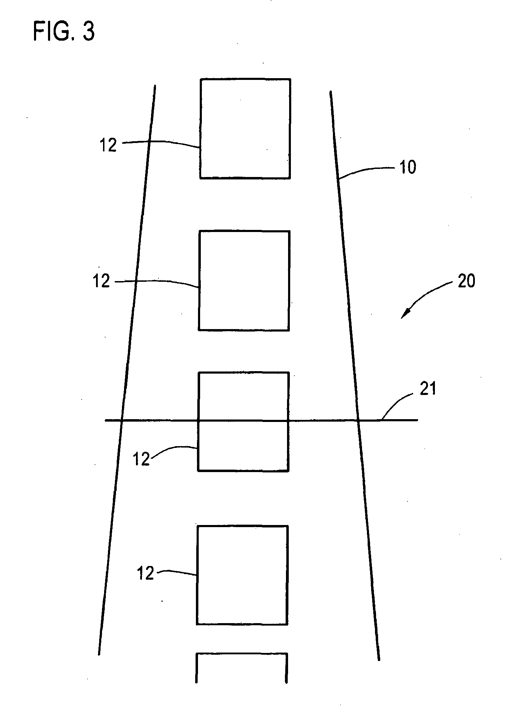

Eine mögliche Darstellung 20 hierzu zeigt Fig. 3. Dort ist schematisch die eigene Fahrspur 10 mit den ebenso nur schematisch angedeuteten Verkehrsteilnehmern 12 gezeigt. Die aktuelle Position des Anfahrpunktes 17 wird durch einen Balken 21, der ständig aktualisiert wird, verdeutlicht.

## Patentansprüche

1. Verfahren zum Betrieb eines Start-Stopp-Systems (3) eines Kraftfahrzeugs (1), welches zum Ausschalten des Motors (2) des Kraftfahrzeugs (1) in einer Standphase des Kraftfahrzeugs (1) ausgebildet ist, wobei in einer detektierten Stausituation über wenigstens eine drahtlose Kommunikationseinrichtung (8) von vor dem eigenen Kraftfahrzeug (1) befindlichen weiteren Verkehrsteilnehmern (12) empfangene Bewegungszustandsinformationen der weiteren Verkehrsteilnehmer (12) zur Ermittlung einer eine Auflösung und/oder Bewegungsphase des Staus beschreibenden Stauinformation ausgewertet werden und ein automatisches Starten des Motors (2) und/oder eine Ausgabe eines Hinweises an den Fahrer in Abhängigkeit der Stauinformation erfolgt, wobei die Position und Geschwindigkeit eines vor dem Kraftfahrzeug (1) befindlichen Anfahrpunktes (17), an dem die weiteren Verkehrsteilnehmer (12) vom stillstehenden in den fahrenden Zustand übergehen, als Stauinformation ermittelt wird, wobei das Starten des Motors (2) und/oder die Ausgabe des Hinweises bei Unterschreitung eines Schwellwerts, der in Abhängigkeit von der Geschwindigkeit des Anfahrpunktes (17) angepasst wird, durch den Abstand des Anfahrpunktes (17) von dem eigenen Kraftfahrzeug (1) erfolgt.

2. Verfahren nach einem der vorangehenden Ansprüche, **dadurch gekennzeichnet, dass** als Bewegungszustandsinformation eine Geschwindigkeit und/oder eine Position und/oder eine Beschleunigung empfangen wird.

3. Verfahren nach einem der vorangehenden Ansprüche, **dadurch gekennzeichnet, dass** die Kommunikationseinrichtung (8) eine Fahrzeug-zu-Fahrzeug-Kommunikationseinrichtung (8) ist und/oder die Reichweite der Kommunikation größer als 50 m, insbesondere größer als 100 m, ist.

4. Verfahren nach einem der vorangehenden Ansprüche, **dadurch gekennzeichnet, dass** der Hinweis optisch und/oder akustisch und/oder haptisch ausgegeben wird, insbesondere über ein Head-Up-Display.

5. Kraftfahrzeug (1), umfassend eine Kommunikationseinrichtung (8) zur Kommunikation mit anderen Verkehrsteilnehmern (12, 13, 14) und ein Start-Stopp-System (3) mit einem zur Durchführung eines Verfahrens nach einem der vorangehenden Ansprüche ausgebildeten Steuergerät (4).

## Claims

1. Method for operating a start-stop system (3) of a motor vehicle (1), which is configured to turn off the engine (2) of the motor vehicle when the motor vehicle (1) is in a stationary phase, wherein, when a traffic jam is detected, movement status information received, through at least one wireless communication device (8), from other road users (12) located in front of the motor vehicle (1) in question is evaluated, in order to ascertain congestion information indicating a clearing and/or moving phase of the jam, and the engine (2) is automatically started and/or a message is issued to the driver based on the congestion information, while the position and speed of a drive point (17) located in front of the motor vehicle (1), at which the other road users (12) are switching from a stationary to a moving state, is determined as congestion information, the starting of the engine (2) and/or the issuing of the message taking place as a result of the distance of the drive point (17) from the motor vehicle (1) in question, on falling below a threshold which is adjusted depending on the speed of the drive point (17).

2. Method according to one of the preceding claims, **characterised in that** a speed and/or a position and/or an acceleration is received as the movement status information.

3. Method according to one of the preceding claims, **characterised in that** the communication device (8) is a vehicle-to-vehicle communication device (8) and/or the range of the communication is greater than 50 m, particularly greater than 100 m.

4. Method according to one of the preceding claims, **characterised in that** the message is issued by optical and/or acoustic and/or haptic means, particularly by a head-up display.

5. Motor vehicle (1) comprising a communication device (8) for communicating with other road users (12, 13, 14) and a start-stop system (3) having a control device (4) configured to carry out a method according to one of the preceding claims.

## Revendications

1. Procédé pour faire fonctionner un système de mise en veille (3) d'un véhicule automobile (1) qui est conçu pour arrêter le moteur (2) du véhicule automobile (1) dans une phase d'immobilité du véhicule automobile (1),
selon lequel, dans une situation détectée d'embouteillage, par l'intermédiaire d'au moins un dispositif de communication sans fil (8), on évalue des informations d'état de mouvement d'autres usagers de la route (12) qui sont reçues des autres usagers de la route (12) se trouvant devant le véhicule automobile considéré (1) afin de déterminer une information d'embouteillage décrivant une phase de mouvement et/ou une disparition de l'embouteillage et on effectue un démarrage automatique du moteur (2) et/ou une sortie d'une indication au conducteur en fonction de l'information d'embouteillage,
selon lequel on détermine comme information d'embouteillage la position et la vitesse d'un point de démarrage (17) qui est situé devant le véhicule automobile (1) et au niveau duquel les autres usagers de la route (12) passent de l'état immobile à l'état roulant et selon lequel on effectue le démarrage du moteur (2) et/ou la sortie de l'indication lorsque la distance du véhicule automobile considéré (1) au point de démarrage (17) devient inférieure à une valeur de seuil qui est adaptée en fonction de la vitesse du point de démarrage (17).

2. Procédé selon l'une des revendications précédentes, **caractérisé en ce que**, comme information d'état de mouvement, on reçoit une vitesse et/ou une position et/ou une accélération.

3. Procédé selon l'une des revendications précédentes, **caractérisé en ce que** le dispositif de communication (8) est un dispositif de communication de véhicule à véhicule (8) et/ou **en ce que** la portée de la communication est supérieure à 50 mètres, notamment supérieure à 100 mètres.

4. Procédé selon l'une des revendications précédentes, **caractérisé en ce que** l'indication est donnée sous forme optique et/ou acoustique et/ou tactile, notamment par l'intermédiaire d'un dispositif d'affichage à tête haute.

5. Véhicule automobile (1), comprenant un dispositif de communication (8) pour la communication avec d'autres usagers de la route (12, 13, 14) et un système de mise en veille (3) avec un appareil de commande (4) conçu pour la mise en oeuvre d'un procédé selon l'une des revendications précédentes.
